# EUROPÄISCHE PATENTSCHRIFT

(11) **EP 2 870 382 B1**
(45) Veröffentlichungstag und Bekanntmachung des Hinweises auf die Patenterteilung: **07.03.2018**
(21) Anmeldenummer: 13728957.5
(22) Anmeldetag: 04.06.2013
(51) Int. Cl.: F16H 57/04

(54) **GETRIEBE MIT EINER WELLE UND DARAUF ANGEBRACHTEM LÜFTER IN EINER LÜFTERHAUBE**
GEARBOX HAVING A SHAFT AND FAN FITTED THEREON IN A FAN COVER
MÉCANISME DE TRANSMISSION POURVU D'UN ARBRE ET D'UN VENTILATEUR MONTÉ SUR L'ARBRE DANS UN CARÉNAGE DE VENTILATEUR

(30) Priorität: 06.07.2012 DE 102012013351
(43) Veröffentlichungstag der Anmeldung: 13.05.2015
(73) Patentinhaber: Sew-Eurodrive GmbH & Co. KG, 76646 Bruchsal (DE)
(72) Erfinder: VÖLKER, Konstantin, 76646 Bruchsal (DE); BARTON, Peter, 75015 Bretten (DE); DIETRICH, Stefan, 76149 Karlsruhe (DE); BUNKA, Anette, 76344 Eggenstein-Leopoldshafen (DE)
(86) Internationale Anmeldenummer: PCT/EP2013/001624
(87) Internationale Veröffentlichungsnummer: WO 2014/005666

(56) Entgegenhaltungen:
- DE-A1-102005 031 197
- DE-A1-102007 009 366
- DE-A1-102008 010 912
- GB-A- 1 094 709
- GB-A- 2 048 382
- GB-A- 2 282 206
- JP-A- H08 105 521

## Beschreibung

Die Erfindung betrifft ein Getriebe mit einer Welle.
Aus der DE 10 2007 009 366 A1 ist ein Lüfterrad mit Düseneffekt bekannt.
Aus der DE 10 2005 031 197 A1 ist ein Lüfter bekannt, bei dem die Anströmung auf eine um 30° geneigte Fläche verlegt ist.
Aus der JP H08 105521 A ist ein Getriebe mit einem Lüfter bekannt, das die Merkmale des Oberbegriffs des Anspruchs 1 aufweist. Aus der DE 10 2008 010 912 A1 ist ein Getriebe mit einem konvex geformten Luftleitring eines Lüfters bekannt.
Aus der GB 2 048 382 A ist ein Lüfter bekannt.
Aus der DE 10 2007 009 366 A1 ist ein Lüfterrad bekannt
Aus der GB 1 094 709 A ist ein Lüfter-gekühltes Schneckengetriebe bekannt.
Aus der DE 10 2005 031 197 A1 ist ein Getriebemotor mit zwischen einem Getriebe und Elektromotor angeordnetem Lüfter bekannt.
Aus der GB 2 282 206 A ist eine Kühlanordnung für ein Getriebe bekannt.
Der Erfindung liegt daher die Aufgabe zugrunde, ein Getriebe mit einer Welle in möglichst kompakter Weise weiterzubilden, also möglichst viel Leistung bei möglichst geringem Volumen zu ermöglichen.

Erfindungsgemäß wird die Aufgabe bei dem Getriebe mit einer Welle nach den in Anspruch 1 angegebenen Merkmalen gelöst.
Wichtige Merkmale der Erfindung bei dem Getriebe mit einer Welle, insbesondere eintreibende Welle, sind, dass ein Lüfterrad drehfest mit der Welle verbunden ist,
wobei am Getriebegehäuse eine Lüfterhaube verbunden ist, die das Lüfterrad zumindest teilweise umgibt,
wobei mit der Lüfterhaube ein Trennblech zur Trennung des Druckraums des Lüfters vom Saugraum des Lüfters verbunden ist,
wobei das Trennblech eine Lufteintrittsöffnung für das Lüfterrad aufweist und auf der vom Getriebe axial abgewandten Seite des Lüfterrades angeordnet ist.
Von Vorteil ist dabei, dass der Druckraum vom Saugraum getrennt ist durch ein einfaches dünnes und kostengünstiges Metallblech, insbesondere Stahlblech. Somit ist ein besonders effektives Kühlen des Getriebes ermöglicht, da eine Rückverwirbelung oder Rückführung des vom Lüfter geförderten Luftstroms verhindert ist. Erfindungsgemäss weist der Lüfter ein Lüfterrad auf, das eine obere und eine untere Deckscheibe aufweist, die axial voneinander beabstandet sind und Lüfterflügel des Lüfterrads zwischen den Deckscheiben angeordnet sind,
wobei das Trennblech eine Lufteintrittsöffnung für das Lüfterrad aufweist und auf der vom Getriebe axial abgewandten Seite einer Deckscheibe des Lüfterrades angeordnet ist. Von Vorteil ist dabei, dass die Luft in Kanälen des Lüfterrades geführt ist, wobei die Kanäle durch die Lüfterflügel und die Deckscheiben gebildet sind. Außerdem ist der Lufteintritt durch die mittig angeordnete Öffnung im Trennblech derart ausführbar, dass die Luft direkt in die Kanäle des Lüfterrads zugeführt wird und möglichst geringe Verwirbelungen und Wirbelverluste im Zutrittsbereich entstehen. Die Öffnung in der Trennscheibe entspricht dabei im Wesentlichen dem dem Trennblech zugewandten Öffnungsdurchmesser des Lufteintritts des Lüfterrads. Weiter erfindungsgemäss ist das Lüfterrad ein Radiallüfterrad, wobei die Lüfterflügel des Lüfterrads in Umfangsrichtung unregelmäßig voneinander beabstandet sind. Von Vorteil ist dabei, dass ein energieeffizient arbeitendes Lüfterrad einsetzbar ist, das eine nur geringe Geräuschentwicklung aufweist.

Bei der erfindungsgemässen Ausgestaltung ist das Trennblech lösbar verbunden mit der Lüfterhaube. Von Vorteil ist dabei, dass durch Austausch des Trennblechs wahlweise unterschiedlich große Lüfterräder in der Lüfterhaube vorsehbar sind.
Bei einer vorteilhaften Ausgestaltung grenzt das Trennblech ans Lüfterrad an, wobei eine Beabstandung vorgesehen ist, die eine Berührung von Trennblech und Lüfterrad verhindert, aber keine wesentliche Rückströmung vom Druckraum in den Saugraum ermöglicht. Von Vorteil ist dabei, dass keine Reibverluste auftreten und dennoch keine Rückführung des geförderten Luftstroms auftritt.
Bei einer vorteilhaften Ausgestaltung ist die Lüfterhaube und/oder das Getriebegehäuse rechteckförmig
und/oder
der Außendurchmesser des Lüfterrads ist größer als die Breite des Getriebegehäuses und/oder ist kleiner als die Höhe des Getriebegehäuses. Von Vorteil ist dabei, dass der geförderte Luftstrom entlang des Getriebegehäuses führbar ist.

Bei der erfindungsgemässen Ausgestaltung sind Luftleitbleche zur Verhinderung oder Verminderung von Drall des aus der Lüfterhaube ausströmenden Luftstroms zwischen Lüfterhaube und Getriebegehäuse angeordnet,
wobei die Luftleitbleche axial beabstandet sind vom Lüfterrad, insbesondere mit dem Abstand h1. Von Vorteil ist dabei, dass ein möglichst unverwirbelter Luftstrom aus dem Lüfter oder zumindest aus der den Lüfter umgebenden Lüfterhaube austritt.

Bei der erfindungsgemässen Ausgestaltung ist die Lüfterhaube im Luftaustrittsbereich als Düse ausgeformt, so dass ein austretender Luftstrom entlang dem Getriebegehäuse strömt. Von Vorteil ist dabei, dass die Austrittsgeschwindigkeit erhöhbar ist.
Bei einer vorteilhaften Ausgestaltung ist ein Deckblech axial vom Trennblech beabstandet, so dass der Luftzutritt aus radialer Richtung erfolgt, insbesondere wobei das Deckblech Ausnehmungen aufweist zur Ermöglichung von zusätzlich axial eintretendem Luftstrom. Von Vorteil ist dabei, dass aus allen Umfangswinkeln Luft im Wesentlichen gleichmäßig eintritt.
Bei einer vorteilhaften Ausgestaltung ist die Lüfterhaube, insbesondere mit Trennblech, als Stanz-Biegeteil ausgeführt,
insbesondere wobei die Düse durch Anstellung einer Lüfterhaubenkante im Luftaustrittsbereich ausgeführt ist, insbesondere wobei der Anstellwinkel zwischen 10° und 40° ist. Von Vorteil ist dabei, dass die Herstellung der Düse in einfacher Weise, insbesondere durch Biegen ausführbar ist. Der angegebene Winkelbereich ermöglicht eine energieeffiziente Geschwindigkeitserhöhung.
Bei einer vorteilhaften Ausgestaltung ist der Außenradius des Lüfterrads größer als die Breite des Getriebes und ist kleiner als die Höhe des Getriebes. Von Vorteil ist dabei, dass der austretende Luftstrom entlang der Seiten des Getriebes austritt.
Bei anderen erfindungsgemäßen Ausführungsbeispielen wird wahlweise ein Lüfterrad eingebaut, dessen Außenradius des Lüfterrads kleiner als die Breite des Getriebes und kleiner als die Höhe des Getriebes. Dabei ist dann wiederum der Radius der Öffnung des Trennblechs entsprechend klein ausgeführt, also mit dem Außenradius des durch die Kanäle des Lüfterrades gebildeten Lufteintrittsbereichs des Lüfterrades.
Bei einer vorteilhaften Ausgestaltung erstrecken sich die Luftleitbleche radial vom Getriebegehäuse zur Lüfterhaube. Von Vorteil ist dabei, dass eine einfache Antidrallwirkung erzielbar ist. Außerdem sind die Luftleitbleche jeweils eben ausformbar und sehr dünnwandig, so dass eine im Wesentlichen rein radiale Erstreckung ausreicht.

Bei einer vorteilhaften Ausgestaltung weist das Lüfterrad eine obere und eine untere Deckscheibe auf, die axial voneinander beabstandet sind und Lüfterflügel zwischen den Deckscheiben angeordnet sind, so dass Kanäle gebildet sind,
wobei der Kanalquerschnitt vom radial weiter innen liegenden Eintrittsbereich am Lüfterrad zum radial weiter außen liegenden Austrittsbereich am Lüfterrad monoton zunimmt,
insbesondere wobei der Eintrittsbereich an einer axialen Position erfolgt, insbesondere also die Eintrittsbereichsfläche eine sich nur radial und in Umfangsrichtung erstreckende Fläche und die Austrittsbereichsfläche ein sich in radialer Richtung, in Umfangsrichtung und in axialer Richtung erstreckende Fläche ist. Von Vorteil ist dabei, dass ein Diffusoreffekt ausführbar ist und trotzdem der Lüfter eine Förderwirkung bewirkt. Somit wird die Luft einerseits nach radial außen befördert und andererseits ein hoher Druck aufgebaut. Somit ist bei Luftaustritt aus der Lüfterhaube eine hohe Austrittsgeschwindigkeit erreichbar mittels der Düse, die den vom Lüfter aufgebauten Druck umwandelt in eine hohe Austrittsgeschwindigkeit. Außerdem weist der nach radial außen geförderte Luftstrom eine axiale Komponente auf, da die Austrittsbereichsfläche sich in allen drei Richtungen erstreckt. Die Austrittsbereichsfläche des Lüfterrads vereinfacht also ein Umlenken des radial geförderten Luftstroms in die axiale Richtung, wobei die Lüfterhaube zur vollständigen Umlenkung in axiale Richtung zusätzlich wirksam ist.

Bei einer vorteilhaften Ausgestaltung ist zumindest eine der Deckscheiben konisch geformt. Von Vorteil ist dabei, dass eine schwache Diffusorwirkung, also die entsprechend schwache Zunahme des Kanalquerschnitts nach radial außen in einfacher Weise erreichbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist ein erfindungsgemäßes Getriebe mit angebautem Lüfter 5 schematisch in angeschnittener Draufsicht gezeigt.
In der Figur 2 ist ein Ausschnitt aus Figur 1 um den Lüfter 5 herum gezeigt.
In der Figur 3 ist eine Ansicht in axialer Richtung gezeigt.
In der Figur 4 ist beim Querschnitt nach Figur 1 die Lüfterhaube entfernt.

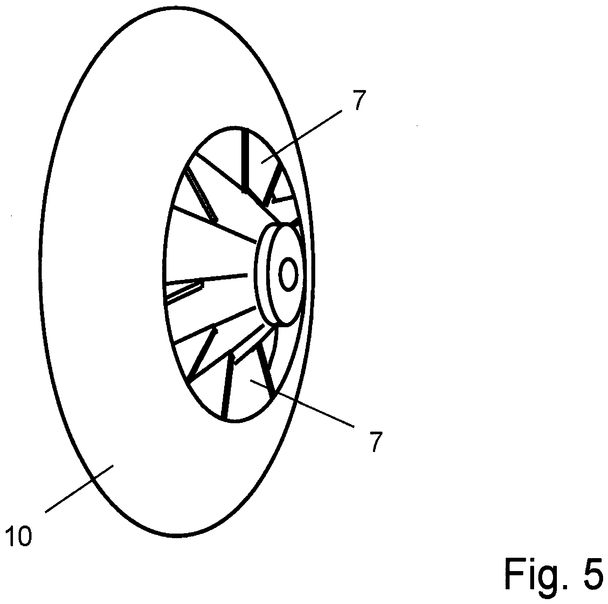

In der Figur 5 ist eine Schrägansicht aus einer ersten Blickrichtung auf den Lüfter 5 gezeigt.

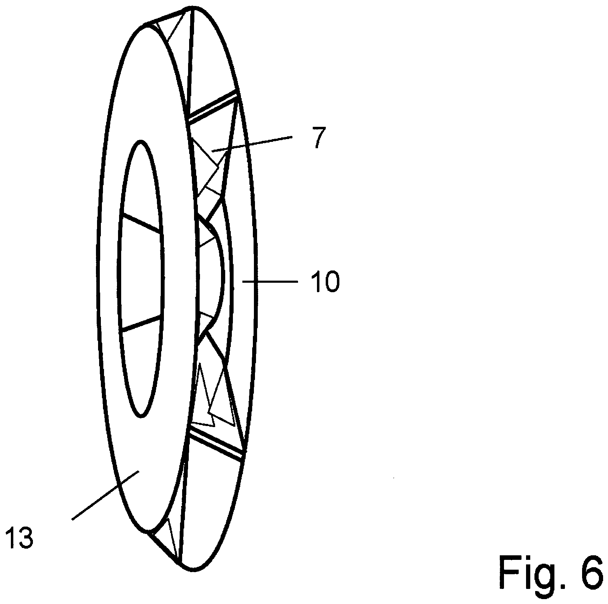

In der Figur 6 ist eine Schrägansicht aus einer anderen Blickrichtung auf den Lüfter 5 gezeigt.

Wie in den Figuren dargestellt, ist ein Lüfter 5 auf der eintreibenden Welle 8 des Getriebes 6 drehfest verbunden. An dem Getriebegehäuse ist eine Lüfterhaube 9 angeordnet, die den Lüfter 5 umgibt.

Das Getriebe ist als Kegelradgetriebe ausgeführt, weshalb die eintreibende Welle 8 in einem Kegeltopfgehäuseteil 11 gelagert ist, das mit dem Gehäuse des Getriebes 6 verbunden ist.

Der Lüfter 5 umfasst ein Radiallüfterrad, dessen Lüfterflügel 7 sich radial, insbesondere nur radial erstrecken. Somit ist eine drehrichtungsunabhängige Luftförderung ermöglicht.

Das Radiallüfterrad weist eine obere Deckscheibe 10 und eine untere Deckscheibe 13 auf, zwischen denen die Lüfterflügel 7 angeordnet sind. Die obere Deckscheibe 10 und die untere Deckscheibe 13 sind also axial voneinander beabstandet. Die Lüfterflügel 7 überdecken den axialen Zwischenbereich zwischen der oberen und unteren Deckscheibe (10, 13).

Die Lüfterhaube 9 weist ein Trennblech 1 auf, das sich radial erstreckt und an einer axialen Position angeordnet ist, die auf der vom Getriebe mit Kegeltopfgehäuseteil 11 axial abgewandten Seite angeordnet ist. Das Trennblech 1 weist eine mittig angeordnete Öffnung auf, so dass die Luft aus axialer Richtung eingelassen wird. Allerdings ist die Öffnung im Trennblech 1 derart klein ausgeführt, dass die eingelassene Luft nicht auf den äußeren Rand des Lüfterrads trifft. Hierzu ist der Innendurchmesser der Öffnung der Trennscheibe 1 kleiner als der maximale Außendurchmesser des Lüfters 5.

Durch die Anordnung des Lüfters 5 auf der eintreibenden Welle des als Untersetzungsgetriebe ausgeführten Getriebes ist der Lüfter 5 auf der am schnellsten drehenden Welle, nämlich auf der eintreibenden Welle 8, angeordnet.

Die Lüfterhaube 9 lenkt den vom Lüfter 5 geförderten Luftstrom aus der radialen in die axial Richtung um. Mittels Verengungen erzeugenden Mitteln ist im axialen Austrittsbereich eine Düse 3 und somit eine erhöhte Austrittsgeschwindigkeit erreicht.

Die Austrittsöffnungen der Lüfterhaube 9 sind an ihrem vom Eintrieb abgewandten Seite derart angeordnet, dass der austretende Luftstrom entlang des Getriebegehäuses strömt.

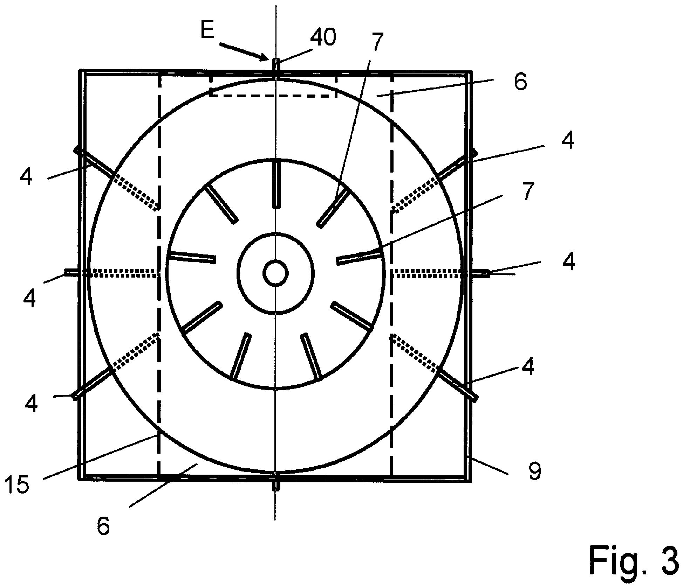

Allerdings ist das Getriebe, wie in der Draufsicht aus Figur 3 ersichtlich, im Wesentlichen quaderförmig ausgeführt, so dass die Frontseite eine im Wesentlichen rechteckförmige Kontur aufweist. Die Lüfterhaube 9 hat ebenfalls eine rechteckige Form, die vorzugsweise im Wesentlichen quadratisch ist und insbesondere eine größere Querschnittsfläche aufweist als der Lüfter 5 und das Getriebegehäuse, insbesondere in Draufsicht gemäß Figur 3.

Dabei ist in Figur 3 das Getriebegehäuse gestrichelt angedeutet.

Der maximale Außendurchmesser des Lüfters 5 ist größer als die Breite des Getriebegehäuses aber kleiner als die Höhe des Getriebegehäuses. Ebenso ist die Lüfterhaube breiter als die Breite des Getriebegehäuses. Die Austrittsöffnung zwischen Lüfter 5 und Getriebegehäuse ist daher groß, insbesondere entspricht sie ungefähr der Differenz zwischen der Breite der Lüfterhaube 9 und der Breite des Getriebegehäuses.

Zur Verhinderung von Drall bei dem vom Lüfter 5 geförderten Luftstrom weist die Lüfterhaube 9 radial ausgerichtete und sich erstreckende Luftleitbleche 4 auf. Somit wird also der Drehimpuls des geförderten Luftstroms reduziert. Dabei erstreckt sich jedes der Luftleitbleche von der Lüfterhaube bis zum Getriebegehäuse. Je nach Umfangswinkelposition des jeweiligen Luftleitblechs 4 ist die radiale Ausdehnung verschieden. Die Luftleitbleche 4 wirken also als Antidrallbleche für den austretenden Luftstrom.

Der Durchmesser des Lüfters 5 ist kleiner als die Höhe des Getriebegehäuses.

Das obere Deckblech 10 ist konisch geformt, wobei die Konusspitze entfernt ist. Die so vorhandene Öffnung ist als Lufteintritt wirksam und weist einen Durchmesser auf, der kleiner oder gleich ist wie der Durchmesser der durch das Trennblech 1 bereit gestellten Lufteinlassöffnung.

Nach Lufteintritt in den in Umfangsrichtung durch die Lüfterflügel 7 begrenzten Förderkanal des Lüfters 5 wächst der Kanalquerschnitt Q2 vom Einströmquerschnitt Q1 an bis er den Ausströmquerschnitt Q3 erreicht. Vorzugsweise ist dabei das Anwachsen, also die Zunahme, des Querschnitts Q2 monoton. Der Lüfter arbeitet also einerseits als Diffusor, andererseits ist aber durch die Ausbildung als Radiallüfter eine Förderwirkung in radialer Richtung vorhanden. Somit wird ein relativ hoher Druck bei relativ kleiner Strömungsgeschwindigkeit vom Radiallüfter erzeugt.

Die untere Deckscheibe 13 ist vorzugsweise eben ausgeführt, erstreckt sich also in radialer Richtung und in Umfangsrichtung.

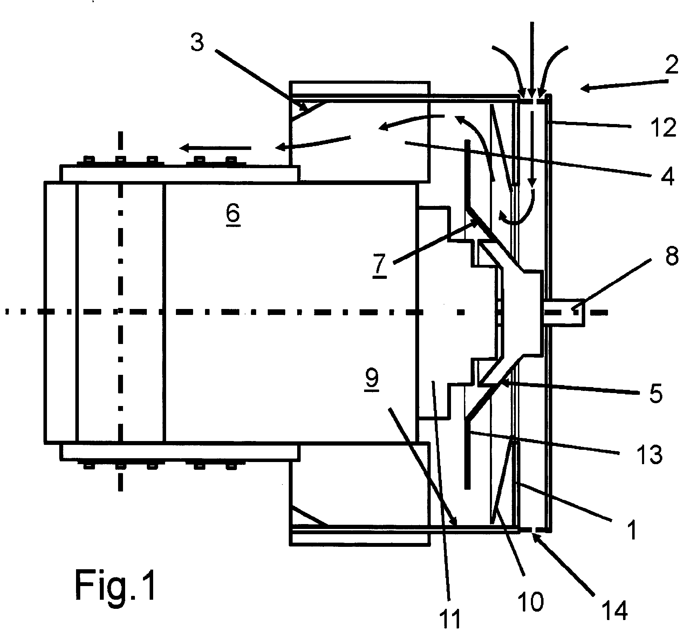

Wie in Figur 1 gezeigt, erfolgt der Luftzutritt in den von der Lüfterhaube 9 umgebenen Bereich aus radialer Richtung, weil die zugehörige Öffnung in radialer Richtung in die Umgebung mündet.

Mittels des Deckblechs 12 wird die eingetretene Luft nach radial weiter innen geführt und strömt dort im Öffnungsbereich des Trennblechs 1 axial in den Lüfter 5 ein. Der vom Lüfter 5 radial herausgeförderte Luftstrom wird von der Lüfterhaube 9 umgelenkt. Der Austritt des Luftstroms erfolgt in axialer Richtung entlang des Getriebegehäuses. Im Austrittsbereich der Lüfterhaube 9 bewirkt die Verengung einen Düseneffekt und somit eine Erhöhung der Strömungsgeschwindigkeit des austretenden Luftstroms.

Durch das Deckblech 12 ist der radial gerichtete Lufteintritt ermöglicht. Somit ist die eintreibende Welle 8 mit einer antreibenden Welle eines das Getriebe antreibenden Elektromotors verbindbar.

Der von der Lüfterhaube 9 überdeckte axiale Bereich umfasst den von den Lüfterflügeln 7 überdeckten axialen Bereich und zumindest teilweise auch den von den Luftleitblechen 4 überdeckten axialen Bereich.

Lüfterhaube 12 und Trennblech 1 sind einstückig fertigbar, insbesondere aus einem Metallblech, insbesondere Stahlblech. Eine besonders einfache und kostengünstige Herstellung ist erreichbar durch die Fertigung als Stanz-Biegeteil. Auch eine zweistückige Ausführung ist vorteilhaft, insbesondere bei kleinen Stückzahlen.

Die Lüfterhaube weist einen rechteckförmigen Querschnitt auf, insbesondere wenn die Normale der Schnittfläche des Querschnitts parallel zur Achse der eintreibenden Welle ist.

Zur Reduzierung von Wirbelverlusten sind die Luftleitbleche 4 axial beabstandet von dem Lüfter 5.

Die Lüfterflügel 7 sind in Umfangsrichtung nicht gleichmäßig voneinander beabstandet, so dass Verluste, insbesondere Körperschall- und Luftschallverluste, reduzierbar sind. Vorzugsweise sind neun Lüfterflügel 7 vorhanden.

Die Nabe des Lüfterrades ist konisch ausgeführt, wobei der Umfang der Nabe in Strömungsrichtung zur Umleitung der Luft in radiale Richtung zunimmt.

Wie in Figur 3 gezeigt, sind in Umfangsrichtung sechs radial lang sich erstreckende Luftleitbleche 4 vorhanden und zwei weitere, radial sich kurz erstreckende Luftleitbleche 40, die im oberen und im unteren Bereich der Lüfterhaube 9 angeordnet sind.

Die Druckseite und die Saugseite sind somit getrennt durch das Trennblech 1. Dabei ist die im Trennblech 1 angeordnete Öffnung für den Lufteintritt kreisförmig ausgeschnitten, wobei der Mittelpunkt des Kreises auf der gedachten Achse der eintreibenden Welle liegt.

Die Düse 3 ist durch Anstellung der Hinterkante der Lüfterhaube 9 einfach herstellbar. Die Anstellung weist einen Winkel zwischen 10° und 40° auf.

Das Deckblech 12 leitet die Luft von radial außen nach radial weiter innen. Somit ist an dem vom Lüfter 5 abgewandten axialen Endbereich der eintreibenden Welle ein beliebiger Anbau vorsehbar. Denn diese axial sich vom Deckblech und dem Getriebe weiter weg sich erstreckenden Anbauten haben keinen wesentlichen Einfluss auf die Luftströmung. Denn das Deckblech 12 ermöglicht den Zustrom der kühlen Umgebungsluft aus radialer Richtung. Selbst wenn also die Anbauten eine heiße Oberfläche aufweisen, transportiert kein Luftstrom Wärme von den Anbauten in den Lüfter. Insbesondere ist also eine Kupplung zwischen dem antreibenden Elektromotor und dem Getriebe, insbesondere der eintreibenden Welle des Getriebes, anordenbar. Gerade bei einer an der eintreibenden Welle 8 angeordneten Fluidkupplung, also hydraulisch arbeitenden Kupplung, welche eine große Ausdehnung in radialer Richtung aufweist, wird trotzdem durch das Deckblech 12 der Zutritt kühler Luft zum Lüfter 5 bewirkbar.

Das Deckblech 12 ist über ein Eingreifschutzgehäuseteil 14 mit der Lüfterhaube 9 verbunden. Das Eingreifschutzgehäuseteil 14 weist Ausnehmungen auf, die derart klein sind, dass kein menschlicher Finger eines Erwachsenen hindurchpasst, aber groß genug sind, um den Luftstrom mit möglichst geringem Widerstand einzulassen

Außerdem ermöglicht das Deckblech 12 ein Anströmen der Luft aus allen Umfangswinkelpositionen. Dabei ist eine gleichmäßige Verteilung erreicht.

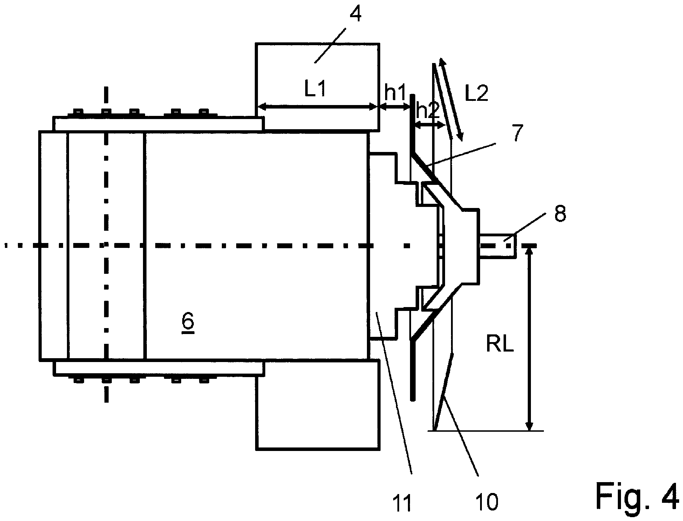

Der Ausströmquerschnitt Q3 ist vorzugsweise zwischen 1,1 mal und 1,3 mal größer als der Einströmquerschnitt Q1. Die in Figur 4 gezeigte Schaufelkanallänge L2 beträgt zwischen dem 0,3 fachen und 0,5 fachen des Lüfterradius RL. Der jeweilige Schaufelkanal ist zumindest in Umfangsrichtung durch die beiden jeweils nächstbenachbarten Lüfterflügel 7 begrenzt und in axialer Richtung einerseits durch die obere Deckscheibe 10 und andererseits durch die untere Deckscheibe 13.

Vorzugsweise grenzt das Trennblech ans Lüfterrad an, wobei eine Beabstandung, also ein Spalt, vorgesehen ist, wobei die Spaltbreite des Spalts, insbesondere also der vom Spalt überdeckte Radialabstandsbereich, kleiner als 10%, insbesondere kleiner als 5%, insbesondere kleiner als 5% und größer als 0,1%, des Außendurchmessers des Lüfterrads ist.

Bei weiteren erfindungsgemäßen Ausführungsbeispielen weist das Deckblech 12 Ausnehmungen auf, so dass zusätzlich auch ein axialer Lufteintritt ermöglicht ist.

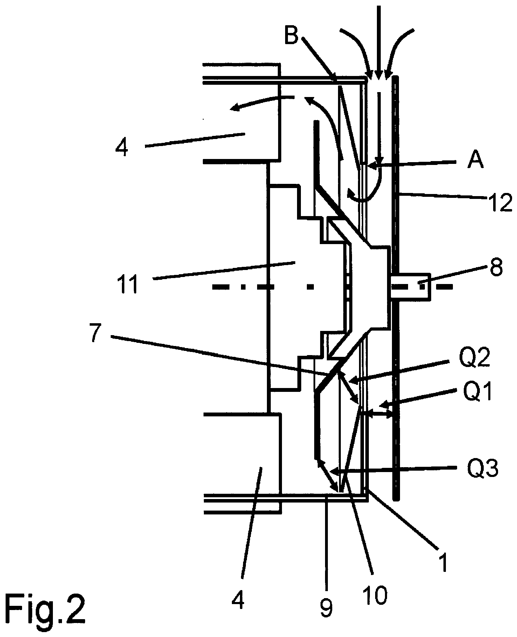

Bei weiteren erfindungsgemäßen Ausführungsbeispielen liegt das Trennblech 1 im Unterschied zur Figur 2 nicht am Innenradius des Lüfters 5 an sondern am Außenradius, wobei in beiden Fällen eine kleine Beabstandung in radialer Richtung zwischen dem Trennblech 1 und dem Lüfter 5 zur Vermeidung von Berührung besteht. Die Beabstandung ist aber unter Berücksichtigung der Fertigungstoleranzen möglichst klein gewählt, so dass die Verluste durch Verwirbelung der Strömung, insbesondere rückwirkende Wirbelströme, gering bleiben.

Bei weiteren erfindungsgemäßen Ausführungsbeispielen ist das Trennblech 1 nicht einstückig mit der restlichen Lüfterhaube ausgeführt, so dass ein einfaches Auswechseln ermöglicht ist.

### Bezugszeichenliste

1 Trennblech
2 Luftzuführbereich
3 Düse
4 Luftleitblech
5 Lüfter
6 Getriebe
7 Lüfterflügel
8 Eintriebswelle
9 Lüfterhaube
10 obere Deckscheibe
11 Kegeltopfgehäuse
12 Deckblech
13 untere Deckscheibe
14 Eingreifschutzgehäuseteil
15 Getriebegehäusekante
40 Luftleitblech

A Öffnungsquerschnitt
Q1 Einströmquerschnitt
Q2 Kanalquerschnitt
Q3 Ausströmquerschnitt

## Patentansprüche

1. Getriebe (6) mit einer Welle, insbesondere eintreibende Welle,
wobei ein Lüfterrad drehfest mit der Welle verbunden ist,
wobei am Getriebegehäuse eine Lüfterhaube (9) verbunden ist, die das Lüfterrad zumindest teilweise umgibt, wobei mit der Lüfterhaube (9) ein Trennblech (1) zur Trennung des Druckraums des Lüfters (5) vom Saugraum des Lüfters (5) verbunden ist,
wobei der Lüfter (5) ein Lüfterrad aufweist, das eine obere und eine untere Deckscheibe (10, 13) aufweist, die axial voneinander beabstandet sind und Lüfterflügel (7) des Lüfterrads zwischen den Deckscheiben (10, 13) angeordnet sind,
wobei das Trennblech (1) eine Lufteintrittsöffnung für das Lüfterrad aufweist und auf der vom Getriebe (6) axial abgewandten Seite einer Deckscheibe (10, 13) des Lüfterrades angeordnet ist,
wobei das Lüfterrad ein Radiallüfterrad mit Lüfterflügeln (7) ist,
wobei Luftleitbleche (4, 40) zur Verhinderung oder Verminderung von Drall des aus **der** Lüfterhaube (9) ausströmenden Luftstroms zwischen Lüfterhaube (9) und Getriebegehäuse angeordnet sind,
wobei die Luftleitbleche (4, 40) axial beabstandet sind vom Lüfterrad,
wobei die Lüfterhaube (9) im Luftaustrittsbereich als Düse (3) ausgeformt ist, so dass ein austretender Luftstrom entlang dem Getriebegehäuse strömt,
**dadurch gekennzeichnet, dass**
das Trennblech (1) lösbar verbunden ist mit der Lüfterhaube (9), so dass durch Austausch des Trennblechs (1) wahlweise unterschiedlich grosse Lüfterräder in der Lüfterhaube (9) vorsehbar sind, und dass die Lüfterflügel (7) des Lüfterrads in Umfangsrichtung unregelmässig voneinander beabstandet sind.

2. Getriebe (6) nach Anspruch 1,
**dadurch gekennzeichnet, dass**
das Trennblech (1) ans Lüfterrad angrenzt, wobei eine Beabstandung vorgesehen ist, die eine Berührung von Trennblech (1) und Lüfterrad verhindert, aber keine wesentliche Rückströmung vom Druckraum in den Saugraum ermöglicht.

3. Getriebe (6) nach mindestens einem der vorangegangenen Ansprüche,
**dadurch gekennzeichnet, dass**
das Trennblech (1) ans Lüfterrad angrenzt, wobei eine Beabstandung, also ein Spalt, vorgesehen ist, wobei die Spaltbreite des Spalts, insbesondere also der vom Spalt überdeckte Radialabstandsbereich, kleiner als 10%, insbesondere kleiner als 5%, insbesondere kleiner als 5% und größer als 0,1%, des Außendurchmessers des Lüfterrads ist.

4. Getriebe (6) nach mindestens einem der vorangegangenen Ansprüche,
**dadurch gekennzeichnet, dass**
die Lüfterhaube (9) und/oder das Getriebegehäuse rechteckförmig ist
und/oder dass
der Außendurchmesser des Lüfterrads größer ist als die Breite des Getriebegehäuses und/oder kleiner ist als die Höhe des Getriebegehäuses.

5. Getriebe (6) nach mindestens einem der vorangegangenen Ansprüche,
**dadurch gekennzeichnet, dass**
ein Deckblech (12) axial vom Trennblech (1) beabstandet ist, so dass der Luftzutritt aus radialer Richtung erfolgt,
insbesondere wobei das Deckblech (12) Ausnehmungen aufweist zur Ermöglichung von zusätzlich axial eintretendem Luftstrom.

6. Getriebe (6) nach mindestens einem der vorangegangenen Ansprüche,
**dadurch gekennzeichnet, dass**
zwischen Deckblech (12) und Trennblech (1) ein Eingreifschutzgehäuseteil (14) angeordnet ist, über welches das Deckblech (12) am Trennblech (1) gehalten ist.

7. Getriebe (6) nach mindestens einem der vorangegangenen Ansprüche,
**dadurch gekennzeichnet, dass**
ein Deckblech (12) axial vom Trennblech (1) beabstandet ist,
und/oder dass
die Lüfterhaube (9), insbesondere mit Trennblech (1), als Stanz-Biegeteil ausgeführt ist,

8. Getriebe (6) nach mindestens einem der vorangegangenen Ansprüche,
**dadurch gekennzeichnet, dass**
die Lüfterhaube (9), insbesondere mit Trennblech (1), als Stanz-Biegeteil ausgeführt ist,
wobei die Düse (3) durch Anstellung einer Lüfterhaubenkante im Luftaustrittsbereich ausgeführt ist,
insbesondere wobei der Anstellwinkel zwischen 10° und 40° ist.

9. Getriebe (6) nach mindestens einem der vorangegangenen Ansprüche,
**dadurch gekennzeichnet, dass**
der Außenradius des Lüfterrads größer ist als die Breite des Getriebes (6) und kleiner ist als die Höhe des Getriebes (6).

10. Getriebe (6) nach einem der Ansprüche 1 bis 8,
**dadurch gekennzeichnet, dass**
der Außenradius des Lüfterrads kleiner als die Breite des Getriebes (6) und kleiner als die Höhe des Getriebes (6), wobei der Radius der Öffnung des Trennblechs (1) dem Außenradius des durch die Kanäle des Lüfterrades gebildeten Lufteintrittsbereichs des Lüfterrades, insbesondere im Wesentlichen, gleicht.

11. Getriebe (6) nach mindestens einem der vorangegangenen Ansprüche,
**dadurch gekennzeichnet, dass**
die Luftleitbleche (4, 40) sich radial erstrecken vom Getriebegehäuse zur Lüfterhaube (9), und/oder dass
das Lüfterrad eine obere und eine untere Deckscheibe (10, 13) aufweist, die axial voneinander beabstandet sind und Lüfterflügel (7) zwischen den Deckscheiben (10, 13) angeordnet sind, so dass Kanäle gebildet sind,
wobei der Kanalquerschnitt vom radial weiter innen liegenden Eintrittsbereich am Lüfterrad zum radial weiter außen liegenden Austrittsbereich am Lüfterrad monoton zunimmt,
insbesondere wobei der Eintrittsbereich an einer axialen Position erfolgt, insbesondere also die Eintrittsbereichsfläche eine sich nur radial und in Umfangsrichtung erstreckende Fläche und die Austrittsbereichsfläche eine sich in radialer Richtung, in Umfangsrichtung und in axialer Richtung erstreckende Fläche ist,
und/oder dass
zumindest eine der Deckscheiben (10, 13) konisch geformt ist.

## Claims

1. A gear unit (6) with a shaft, in particular an input shaft,
wherein a fan impeller is connected in rotation-resistant manner to the shaft,
wherein a fan cowl (9) which at least partially surrounds the fan impeller is connected to the gear unit housing,
wherein a separating plate (1) for separating the pressure space of the fan (5) from the suction space of the fan (5) is connected to the fan cowl (9),
wherein the fan (5) has a fan impeller which has an upper and a lower cover disc (10, 13) which are spaced apart axially from one another, and fan blades (7) of the fan impeller are arranged between the cover discs (10, 13),
wherein the separating plate (1) has an air intake opening for the fan impeller and is arranged on that side of a cover disc (10, 13) of the fan impeller which is axially remote from the gear unit (6),
wherein the fan impeller is a radial fan impeller with fan blades (7),
wherein air baffles (4, 40) for preventing or reducing swirling of the air flow flowing out of the fan cowl (9) are arranged between the fan cowl (9) and gear unit housing,
wherein the air baffles (4, 40) are spaced apart axially from the fan impeller,
wherein the fan cowl (9) is formed as a nozzle (3) in the air outlet region, so that an emerging air flow flows along the gear unit housing,
**characterised in that**
the separating plate (1) is connected detachably to the fan cowl (9), so that fan impellers of different sizes can be provided in the fan cowl (9) as desired by replacing the separating plate (1), and **in that** the fan blades (7) of the fan impeller are irregularly spaced apart from one another in the peripheral direction.

2. A gear unit (6) according to Claim 1,
**characterised in that**
the separating plate (1) adjoins the fan impeller, with a spacing being provided which prevents contact of the separating plate (1) and fan impeller, but does not permit any substantial backflow from the pressure space into the suction space.

3. A gear unit (6) according to at least one of the preceding claims,
**characterised in that**
the separating plate (1) adjoins the fan impeller, with spacing, i.e. a gap, being provided, the gap width of the gap, in particular therefore the radial distance region covered by the gap, being less than 10%, in particular less than 5%, in particular less than 5% and greater than 0.1%, of the external diameter of the fan impeller.

4. A gear unit (6) according to at least one of the preceding claims,
**characterised in that**
the fan cowl (9) and/or the gear unit housing is rectangular
and/or **in that**
the external diameter of the fan impeller is greater than the width of the gear unit casing and/or smaller than the height of the gear unit casing.

5. A gear unit (6) according to at least one of the preceding claims,
**characterised in that**
a cover plate (12) is spaced apart axially from the separating plate (1), so that air enters from the radial direction,
in particular with the cover plate (12) having cutouts for permitting an additionally axially entering air flow.

6. A gear unit (6) according to at least one of the preceding claims,
**characterised in that**
an access-protection housing part (14) is arranged between the cover plate (12) and separating plate (1), by means of which part the cover plate (12) is held on the separating plate (1).

7. A gear unit (6) according to at least one of the preceding claims,
**characterised in that**
a cover plate (12) is spaced apart axially from the separating plate (1),
and/or **in that**
the fan cowl (9), in particular with the separating plate (1), is embodied as a stamped and bent part.

8. A gear unit (6) according to at least one of the preceding claims,
**characterised in that**
the fan cowl (9), in particular with the separating plate (1), is embodied as a stamped and bent part,
the nozzle (3) being embodied in the air outlet region by angling a fan cowl edge,
in particular with the angle of incidence being between 10° and 40°.

9. A gear unit (6) according to at least one of the preceding claims,
**characterised in that**
the external radius of the fan impeller is greater than the width of the gear unit (6) and smaller than the height of the gear unit (6).

10. A gear unit (6) according to one of Claims 1 to 8,
**characterised in that**
the external radius of the fan impeller [is] less than the width of the gear unit (6) and less than the height of the gear unit (6), the radius of the opening of the separating plate (1) being, in particular substantially, identical to the external radius of the air intake region of the fan impeller which is formed by the channels of the fan impeller.

11. A gear unit (6) according to at least one of the preceding claims,
**characterised in that**
the air baffles (4, 40) extend radially from the gear unit housing to the fan cowl (9), and/or **in that**
the fan impeller has an upper and a lower cover disc (10, 13) which are spaced apart axially from each other and fan blades (7) are arranged between the cover discs (10, 13), so that channels are formed,
the channel cross-section increases monotonically from the intake region located radially farther inwards on the fan impeller to the outlet region located radially farther outwards on the fan impeller,
in particular with the intake region taking place [sic] at an axial position, in particular therefore the intake region face is a face extending only radially and in the peripheral direction and the outlet region face is a face extending in the radial direction, in the peripheral direction and in the axial direction,
and/or **in that**
at least one of the cover discs (10, 13) is formed conically.

## Revendications

1. Mécanisme de transmission (6) pourvu d'un arbre, en particulier d'un arbre d'entrée,
sachant qu'une roue de ventilateur est reliée en solidarité de rotation à l'arbre,
sachant qu'un capot de ventilateur (9) est relié sur le carter de transmission, capot qui entoure au moins partiellement la roue de ventilateur,
sachant qu'une tôle de séparation (1), destinée à séparer la chambre de pression du ventilateur (5) de la chambre d'aspiration du ventilateur (5), est reliée au capot de ventilateur (9),
sachant que le ventilateur (5) présente une roue de ventilateur qui présente un disque de recouvrement supérieur (10) et un disque de recouvrement inférieur (13) qui sont axialement distants l'un de l'autre, et des ailettes de ventilateur (7) de la roue de ventilateur sont disposées entre les disques de recouvrement (10, 13),
sachant que la tôle de séparation (1) présente une ouverture d'entrée d'air pour la roue de ventilateur et est disposée sur le côté d'un disque de recouvrement (10, 13) de la roue de ventilateur qui est axialement éloigné du mécanisme de transmission (6),
sachant que la roue de ventilateur est une roue de ventilateur radial pourvue d'ailettes de ventilateur (7),
sachant que des tôles (4, 40) de guidage d'air, destinées à empêcher ou diminuer la turbulence du flux d'air sortant du capot de ventilateur (9), sont disposées entre le capot de ventilateur (9) et le carter de transmission,
sachant que les tôles (4, 40) de guidage d'air sont axialement distantes de la roue de ventilateur,
sachant que le capot de ventilateur (9) est réalisé sous forme de buse (3) dans la région de sortie d'air, de sorte qu'un flux d'air sortant s'écoule le long du carter de transmission,
**caractérisé en ce que** la tôle de séparation (1) est reliée de manière amovible au capot de ventilateur (9), de sorte qu'en échangeant la tôle de séparation (1), on peut prévoir sélectivement des roues de ventilateur de différentes tailles dans le capot de ventilateur (9), et **en ce que** les ailettes de ventilateur (7) de la roue de ventilateur sont irrégulièrement espacées les unes des autres en direction circonférentielle.

2. Mécanisme de transmission (6) selon la revendication 1, **caractérisé en ce que** la tôle de séparation (1) est adjacente à la roue de ventilateur, sachant qu'un espacement est prévu qui empêche un contact entre la tôle de séparation (1) et la roue de ventilateur, mais qui ne permet pas de reflux notable de la chambre de pression dans la chambre d'aspiration.

3. Mécanisme de transmission (6) selon au moins une des revendications précédentes, **caractérisé en ce que** la tôle de séparation (1) est adjacente à la roue de ventilateur, sachant qu'un espacement, donc un interstice, est prévu, sachant que la largeur de passage de l'interstice, en particulier donc la région d'espacement radial couverte par l'interstice, est inférieure à 10%, en particulier inférieure à 5%, en particulier inférieure à 5 % et supérieure à 0,1 %, du diamètre extérieur de la roue de ventilateur.

4. Mécanisme de transmission (6) selon au moins une des revendications précédentes, **caractérisé en ce que** le capot de ventilateur (9) et/ou le carter de transmission sont rectangulaires,
et/ou **en ce que** le diamètre extérieur de la roue de ventilateur est supérieur à la largeur du carter de transmission et/ou est inférieur à la hauteur du carter de transmission.

5. Mécanisme de transmission (6) selon au moins une des revendications précédentes, **caractérisé en ce qu'**une tôle de recouvrement (12) est axialement distante de la tôle de séparation (1), de sorte que l'entrée d'air s'effectue depuis une direction radiale,
sachant en particulier que la tôle de recouvrement (12) présente des évidements afin de permettre en plus un flux d'air entrant axialement.

6. Mécanisme de transmission (6) selon au moins une des revendications précédentes, **caractérisé en ce qu'**une partie de carter (14) de protection contre l'accès est disposée entre la tôle de recouvrement (12) et la tôle de séparation (1), partie par l'intermédiaire de laquelle la tôle de recouvrement (12) est maintenue sur la tôle de séparation (1).

7. Mécanisme de transmission (6) selon au moins une des revendications précédentes, **caractérisé en ce qu'**une tôle de recouvrement (12) est axialement distante de la tôle de séparation (1),
et/ou **en ce que** le capot de ventilateur (9), en particulier pourvu de la tôle de séparation (1), est réalisé sous forme de pièce découpée et pliée.

8. Mécanisme de transmission (6) selon au moins une des revendications précédentes, **caractérisé en ce que** le capot de ventilateur (9), en particulier pourvu de la tôle de séparation (1), est réalisé sous forme de pièce découpée et pliée,
sachant que la buse (3) est réalisée en inclinant un bord du capot de ventilateur dans la région de sortie d'air,
sachant en particulier que l'angle d'inclinaison est compris entre 10° et 40°.

9. Mécanisme de transmission (6) selon au moins une des revendications précédentes, **caractérisé en ce que** le rayon extérieur de la roue de ventilateur est supérieur à la largeur du mécanisme de transmission (6) et inférieur à la hauteur du mécanisme de transmission (6).

10. Mécanisme de transmission (6) selon l'une des revendications 1 à 8, **caractérisé en ce que** le rayon extérieur de la roue de ventilateur est inférieur à la largeur du mécanisme de transmission (6) et inférieur à la hauteur du mécanisme de transmission (6), sachant que le rayon de l'ouverture de la tôle de séparation (1) est égal, en particulier à peu près égal, au rayon extérieur de la région d'entrée d'air de la roue de ventilateur qui est formée par les canaux de la roue de ventilateur.

11. Mécanisme de transmission (6) selon au moins une des revendications précédentes, **caractérisé en ce que** les tôles (4, 40) de guidage d'air s'étendent radialement du carter de transmission au capot de ventilateur (9),
et/ou **en ce que** la roue de ventilateur présente un disque de recouvrement supérieur (10) et un disque de recouvrement inférieur (13) qui sont axialement distants l'un de l'autre, et des ailettes de ventilateur (7) sont disposées entre les disques de recouvrement (10, 13), de sorte que des canaux sont formés,
sachant que la section du canal augmente de façon monotone depuis la région d'entrée sur la roue de ventilateur, située radialement plus à l'intérieur, vers la région de sortie sur la roue de ventilateur, située radialement plus à l'extérieur,
sachant en particulier que la région d'entrée est mise en place à une position axiale, en particulier donc la surface de région d'entrée est une surface s'étendant uniquement radialement et en direction circonférentielle et la surface de région de sortie est une surface s'étendant en direction radiale, en direction circonférentielle et en direction axiale,
et/ou **en ce qu'**au moins un des disques de recouvrement (10, 13) est réalisé de forme conique.
